# EUROPEAN PATENT SPECIFICATION

(11) **EP 2 835 622 B1**
(45) Date of publication and mention of the grant of the patent: **27.02.2019**
(21) Application number: 13179906.6
(22) Date of filing: 09.08.2013
(51) Int. Cl.: G01J 1/42

(54) **Water disinfection device and method for solar disinfection of water**
Wasserdesinfektionsgerät und Verfahren zur solaren Desinfektion von Wasser
Dispositif de désinfection de l'eau et procédé de désinfection solaire de l'eau

(43) Date of publication of application: 11.02.2015
(73) Proprietor: Fundacion Imdea Agua, 28805 Alcala de Henares (ES)
(72) Inventor: Vivar García, Marta, 28805 Madrid (ES); Fuentes Conde, Manuel, 28805 Madrid (ES)
(74) Representative: Pons

(56) References cited:
- US-A- 4 372 680
- US-A- 6 042 720
- US-A1- 2012 318 997
- US-B1- 6 429 438

## Description

### OBJECTIVE OF THE INVENTION

The invention disclosed hereby is aimed to the field of capturing means, such as sensor devices.

The sensor of the invention allows the determination of water quality and presence of microorganisms.

### BACKGROUND OF THE INVENTION

One of the limitations for the widespread of solar water disinfection technologies in developing regions is the lack of low-cost clean water sensors.

One of the most appropriate methods for drinking water treatment (WT) in developing countries, especially in small communities or remote areas, is solar disinfection. Solar technologies for water disinfection are clean, simple, easy to operate and maintain, suitable for domestic use, do not require electricity and have low cost. But they are environmental dependent and can be only used in areas with high solar irradiance conditions all over the year. Another drawback is that in some cases, such as solar distillation, the efficiency is limited. On the other hand, most of the developing countries are located in areas with high irradiance, in the so-called 'sun-belt' zone, where the use of solar technologies is feasible.

Solar water disinfection can convert the sun energy into heat to increase the water temperature for pasteurization or distillation; or it can use directly the germicide effect of UV radiation, or a combination of both. Main solar technologies include: solar distillation, solar pasteurization and the SODIS method with plastic bottles. Solar distillation is based in water evaporation and condensation, but the efficiency is very low as it requires higher solar energy doses for longer periods of time to treat the water than any of the other solar technologies. If the water is not evaporated but the temperature increase is only to about 70°C, then it reaches pasteurization temperature. Systems consist of containers or plastic bottles that are fully black-painted and then exposed to the sun, waiting for the water temperature to reach 70°C. Simple reflectors made with aluminium foils or metallic materials are often used to accelerate the process. Finally, if a combination of UV radiation and temperature is used then the SODIS (Solar Disinfection) processis followed, using clear plastic bottles directly exposed to the sun for a certain number of hours. The combination of UV and heat disinfects the water after a period of exposure.

One of the main drawbacks or limitations to the widespread of these solar disinfection methods in developing countries is that the user has no information about when the water is safe to drink. There is a lack of feasible sensors for natural solar disinfection to detect when the water is clean, i.e. if the treated water has received enough radiation and/or if it has reach the pasteurization temperature. This lack of information reduces their 'usability' in remote regions. SODIS process gives some guidelines and estimates that the water is safe to drink after 6 hours of exposure if it was a sunny day, or between 2-3 days if it is cloudy, but there are no sensors. Scientific research has been looking for all type of low-cost simple sensors that can provide some aid to detect when the water is clean, both for solar UV disinfection (SODIS) and solar water pasteurization:
1. *SODIS sensors*: Most of the approaches are based in UV detectors, monitoring UV radiation and in some cases temperature, not measuring other parameters such as sunshine duration or global irradiance. In general, there exists commercial sensors developed for both UV monitoring and artificial UV disinfection , but either they are too expensive for their use in developing countries or they are not suitable for natural sunlight due to spectrum differences (UVA in sunlight disinfection vs. UVC in artificial disinfection). Main findings for sensors suitable for natural solar disinfection in developing countries are summarised now.

It's known a UV light detector for liquid disinfection units, consisting of two solid state photodetectors with different spectral responses, the first one generating in the ultraviolet-visible-infrared spectrum, and the second generating in the visible-infrared, so the UV light intensity could be calculated by differentiation of the two signals. The device connected the two photodiodes output in reverse parallel, and included the circuitry to monitor the UV level, which could activate a solenoid valve and/or alarm. The system monitored UV radiation and the sensor required power for the associated circuitry. The patent was assigned to WaterHealth International for its use in developing countries (US 6,429,438 B1).

From this initial low cost UV photodetector intended for solar water disinfection till nowadays there has been little research on this topic. Recent findings correspond to publications and patents from 2011 onwards. UVA dosimetric indicators using azo dyes such as Mehtylene Blue or Acid Orange AO24 are other option that is currently being developed. These sensors are based in the complete discolouration of the dye when it degrades after receiving the solar radiation dose for inactivation of pathogens. When the indicator is in the dark and in the presence of oxygen, it is reoxidised back to methylene blue, constituting a reversible system. They only measure UVA radiation.

Another possibility is to use a passive average UV exposure sensor, consisting of an uncured ring of ultraviolet curable sealing photochromic material placed around the neck and cap region of a plastic bottle, patented by R. Lantis et al . The main disadvantage is the inaccuracy of the measurement as it is based in colour change. UV sensors based on colour changes have been traditionally used for skin sun exposure applications, giving an overall indication of the UV content and the health hazard associated with sun exposure. In general this type of detectors does not provide sufficient data for solar disinfection as it only measures an average UV dose with high uncertainty.

From US 2012/0318997 A1 it is known a UV radiation sensor for determining the degree of disinfection of water in a plastic bottle. The sensor comprises one or more solar cells with UV transmitting filters to be fastened to the bottle. Finally, another UV radiation sensor for SODIS, the WADIS sensor, consisting of a UV detector that monitors UV radiation. The integrated UV value is compared to a characteristic curve to determine the water disinfection degree, adjusted by a factor depending on the liquid temperature, which is also measured. It requires a battery, which is fed by solar cells. It is currently under development, and it measures UV radiation and temperature.

Another known technique is that of Solar Water Pasteurization (SWP) sensors: One type of SWP indicator is based on melting of a wax from solid to liquid and then changing shape or location, such as the WAPI (Water Pasteurization Indicator). The WAPI is a polycarbonate tube containing a wax at the top that melts at 69° C. It is placed inside a water container under SWP, and when the water reaches pasteurization temperature the heat will melt the wax, that will move from the top to the bottom of the tube, indicating that pasteurization has been completed.

Another pasteurization indicator is based on materials with different thermal expansions that could interact and make a change in geometry , such as a bi-metal disc that due to different thermal expansions of the two metals will change its shape into a different position. These sensors are under currently development.

In general, main parameters to be monitored in solar disinfection technologies are: sunshine duration (SODIS), global irradiance (SODIS, solar pasteurization), UV irradiance (SODIS) and water temperature (SODIS, solar pasteurization). Sunshine duration is measured from data given by a pyrheliometer or a pyranometer. Cost of commercial equipments are up to 14,000€ for the pyrheliometer and the suntracker, and up to 500-3,000€ for the pyranometer. Global irradiance is measured by a pyranometer. On the other hand, UV irradiance requires a dedicated UV radiometer, with costs between 250€ and 6,000€. Finally, water temperature is obtained by a liquid-immersion temperature sensor, which can be up to 90€. These current costs are too high and not affordable for this type of applications in developing areas.

The objective of this work is to design a low-cost clean water sensor for solar disinfection technologies in developing countries. This article presents the new design, manufacturing and testing of a clean water sensor based on photovoltaic solar cells, showing that this type of sensors are feasible and at low cost.

Sensors based in calibrated solar cells have been widely used in photovoltaics to monitor the performance of PV plants. These solar cells are called 'reference cells' and their characteristics and calibration and are defined in the international standard IEC 60904. From their generated photocurrent, which depends on the number of photons and their spectral distribution, they calculate the solar irradiance. But the measured solar irradiance depends on the spectral response of the cell, which extends from the UV to the NIR, so it does not measure the broadband solar irradiance as a pyranometer does. So they cannot be used as radiometers to measure the total weather data accurately, but to measure the solar irradiance that is available to a PV module for energy conversion, as both the reference cell and the PV module have the same spectral response.

It is known the difference between using pyranometers and reference cells when monitoring PV plants performance , giving a comparison between pyranometers and reference cells when they are used for measuring the efficiency of PV at reference conditions and when they are used as radiometers. When used for measuring the efficiency of PV modules, the reference cell matches the spectral response of the PV module, so it is more accurate. The pyranometer measures the broadband spectrum (UV to FIR) and the response needs to be corrected for PV. On the contrary, a pyranometer is ideal to measure the weather (entire spectrum) but the reference cell will be consider insufficient (only UV to NIR). The use of reference cells instead of pyranometers to monitor PV plants performance because they are a matched reference device that provides a better and more realistic estimation of the expected energy output of a PV plant.

In summary, a photovoltaic solar cell can measure global irradiance and cell temperature (and from the latter estimate water temperature), with current costs that can be down to 0.1-1€/cell. As the main monitoring parameters required in solar disinfection are sunshine duration, global irradiance, UV irradiance and water temperature, it is still needed to study if a photovoltaic solar cell could be used to calculate sunshine duration and UV irradiance.

Some authors have studied if a photovoltaic solar cell can measure sunshine duration (SD). Sunshine duration is defined by the World Metereological Organisation (WMO) as the number of hours for which the direct solar irradiance is above 120W/m². This is the 'pyrheliometric method' as it requires a pyheliometer to measure direct irradiance. The WMO also specifies a 'pyranometric method', using only global irradiance measured by a pyranometer and a dedicated algorithm. Other pyranometric methods are based in climatic parameters such as the global horizontal irradiance, the latitude, longitude, turbidity, temperature, etc. They calculate numeric limits for 'cloudless conditions' and then compare the real data in sub-periods of approximately one minute to calculate sunshine duration. These SD calculation methods are very accurate but they require expensive equipment such as a pyrheliometer, a sun tracker or a pyranometer, which are affordable for a metereological weather station but not for day-to-day applications in developing countries.

A photovoltaic solar cell can be used to measure global irradiance as stated previously, with a spectral response that includes UV, Vis and NIR. But we would also like to measure directly only the UV irradiance. As the cell measures UV, Vis and NIR, one possibility would be to use an optical filter that blocks all the light except the UV, but these specific filters are too expensive for this type of applications.

### DESCRIPTION

The proposed solution is based on the use of photovoltaic solar cells as clean water sensors for solar disinfection to reduce the cost. They can be used to measure both irradiance and cell temperature. First, the generated short-circuit current (Isc) increases linearly as a function of the received irradiance. Therefore, a solar cell can be used to measure the total irradiance received during the day. Second, the open-circuit voltage (Voc) of the solar cell decreases linearly with temperature, being generally used as an indicator of the cell temperature. This means that the cell can be also used as a thermometer, and even estimate if the water on top of an encapsulated cell has reached a certain temperature or not, and for how long.

The proposed solution allows direct measuring of UV with a PV solar cell by means of at least two solar cells and as many filters as required, mainly a low-cost UV-blocking filter for one of the cells, which blocks just the UV part of the spectrum. The first cell would measure the global solar irradiance (comprising UV, Vis and NIR), and the second cell would be under the low-cost UV filter, measuring the global solar irradiance except the UV (Vis and NIR). By differentiating the response of the two cells, we would have just the UV component of irradiance. This would be a low-cost solution since the solar cell is currently affordable due to the booming of the PV industry and the plummeting of silicon technologies costs, with a cost of 0.1-1€ per cell depending on the technology, and any UV filter could be an inexpensive UV filter from photography or from the glass protection and safety films industry, with costs under 10€/m².

Sensors using photovoltaic solar cells that provide information about received irradiance, temperature, UV irradiance and sunshine duration, are provided. A key aspect of the design is the UV irradiance measurement. Two identical cells are used, one of them with a low-cost UV-blocking filter on top, so the total UV irradiance can be calculated as the difference between the two solar cells output. The first cell would be measuring UV-VIS-NIR and the second only VIS-NIR. The UV filter material was explored and a low-cost architectural film was selected. Materials costs for the first prototype were of approximately 4€ excluding labour. Initial testing also included experiments with real polluted water with *E.coli*, showing the feasibility of the sensor of the invention.

Since photovoltaic solar cells are capable of measuring global irradiance, cell temperature, sunshine duration and UV irradiance the object of the invention is a sensor for the SODIS technology. Solar disinfection using UV and temperature requires more parameters to be monitored than solar pasteurization. For solar pasteurization, a simplification of the sensor could be easily conducted.

The sensor of the invention mainly comprises two units, each basic unit comprising at least two single encapsulated PV cells of the same technology. The first is the 'reference unit', with one of the cells including the UV-blocking filter on top. This unit can measure global irradiance, UV irradiance and sunshine duration. A second two-cell unit is placed under the clear plastic bottle ('water unit'), measuring global irradiance through the bottle (and so getting some information on water turbidity and irradiance that is really used in the disinfection process), and cell temperature. If the cell that is measuring temperature was of sufficient area, water temperature above it could be directly estimated. If it is not the case, a low-cost temperature sensor electrically insulated with silicone and placed on the bottle cap can be used to measure water temperature. Any measurement may be collected and sent to a processing unit in order to use said measurement data as input data for water treatment or evaluation purposes.

In summary, the sensor comprises four cells, two directly under the sun as a reference and two under the plastic bottle; plus a temperature sensor on the bottle cap. This configuration allows the measurement of all the relevant parameters to solar disinfection, including: global irradiance, UV irradiance, sunshine duration, global irradiance under the bottle and water temperature. All these information should help to determine whether the water disinfection process has finished and the water is safe to drink or not.

A first sensor that can be used in SODIS but adapted to solar water pasteurization has been manufactured. Detailed design aspects such as size and materials are described below, followed by the final manufacturing process. SODIS uses transparent PET bottles. In general, the most common sizes for PET bottles used in SODIS are small bottles of 1-2 L. The main design issue for the sensor based on solar cells was that the bottle is round and the conventional cells that were going to be used in this first sensor were flat, so for the water unit of the sensor (the one placed underneath the bottle) optical losses between the flat cells and the round bottle had to be minimised. Thin, elongate solar cells were used for this purpose, calculating the most appropriate size for the sensor solar cells from the bottle dimensions. Calculation details can be found in, were different bottles sizes ranging from 1.5L to 2L were analysed, studying their diameters as well as the elongate flat parts on which locate the sensor. Finally, cells 4mm-6mm width and up to 36mm long were found to be suitable.

Materials selection can be divided into the solar cell and the rest of the encapsulation into a complete module, plus the low cost UV filters. Regarding the solar cells, they were monocrystalline silicon solar cells from the Institute of Solar Energy (IES-UPM) in Madrid, Spain. The cells were LGBC solar cells originally manufactured by BP Solar, with an initial size of 6mm x 116mm. Average efficiency of the cells was of 16.8% at STC and the V_{OC} temperature coefficient was -2.3mV/°C. The cells were cut to a length of 30mm, so the final solar cell size for the sensor was 6mm x 30mm. The encapsulation was based on a 1mm glass cover consisting of a microscope slide of clear glass, a clear silicone (Wacker Silgel 612) and a black back cover of Tedlar®, which are standard materials in PV modules. Black Tedlar® was selected to avoid unwanted reflections on the cells serving as sensors.

For the low-cost UV filter, the possibilities explored were using a conventional UV filter from photography, consisting of a 62mm diameter and 1.78mm thickness UV filter from Hama®; or an architectural window film for glass protection and safety provided by the Portuguese company Impersol Lda, the SCL SR PS4 Llumar 0.1mm thickness film. Transmittance of both filters were analysed by using a UV-Vis spectrophotometer. A quartz slide of 1mm was also used as a reference. Data given by the film manufacturer were: one 3.75mm thickness clear window glass without film had 83% total solar transmittance, 90% visible light transmittance and 29% UV rejection. With the SCL SR PS4 film on top, the window achieved 81% total solar transmittance, 89% visible light transmittance and 95% UV rejection. The glass UV filter manufacturer did not provide any information about spectral transmittance. From data related to the transmittance of both the glass filter and the film on 1mm quartz. It can be observed that the Hama glass filter transmittance in the UV is higher than the film. It cuts at a lower wavelength of 329nm, allowing UV light to pass through, with a final overall UV blockage of 59%. The UV film on clear slide rejects 90% of the total UV with a cut-off wavelength of 383nm, vs. the 95% UV rejection given by the manufacturer. It reaches 88% visible light transmittance vs. the 90% visible transmittance provided by the manufacturer. These differences are mainly due to the different type of glass used as a support for the film. As a reference, the quartz slide only blocks 8% of the total UV. The architectural film was finally selected as a low-cost UV filter.

So the UV-blocking filter or UV filter is aimed to:
- Block UV light reaching the solar cells, from total UV to the single UV bands, mainly UVA.
- be designed for outdoors.
- be applied on top of an encapsulated cell.

Possible designs for the UV-blocking filter or UV filter.
a) Architectural UV film from industry
   * Applied directly on top of the cell if prepared for outdoors (as in the article)
   * If not, applied onto a clear glass (that transmits UV light) and then facing down on top the cell, possibly with a thin layer of encapsulant to reduce optical losses (some instructions on how to use these films in windows attached)
      Materials of the filter: PET + UV additives + adhesive
      UV blockage: 95-99% (datasheets attached, data obtained at the end of document).
b) Glass filter from photography
   * Applied directly on top of the cell with a thin layer of encapsulant in between.
      Materials of the filter: Glass + UV additives
      UV blockage: To be analysed, it will depend on the quality of the filter. The one we used actually didn't block much (data at the end of the document).
c) UV coating on glass
   * Glass with a UV absorbing coating on top. Applied directly with a thin layer of encapsulant
      Materials of the filter: Clear glass + layer of a UV absorptive material (e.g. TiO2, ZnO, etc.)
      UV blockage: Depending on material coating characteristics.
d) Commercial PET/polymer with UV absorbers
   * Commercial PET with UV absorbers directly on top of the cell with encapsulant. Depending on outdoors stability, encapsulated with a clear glass, similarly to option a-2, but with two layers of thin encapsulant (article on PET with absorbers, article on degradation of PET attached).
      Materials of the filter: Clear glass + layer of a UV absorptive material (e.g. TiO2, ZnO, etc)
      UV blockage: Depending on material coating characteristics.

Finally, it needs to be considered that the objective is not measuring the total UV irradiance accurately but the UV irradiance that is available to the water purification process, i.e. the UV irradiance that reaches the water within the bottle, including the transmission losses when the light crosses the PET bottle.

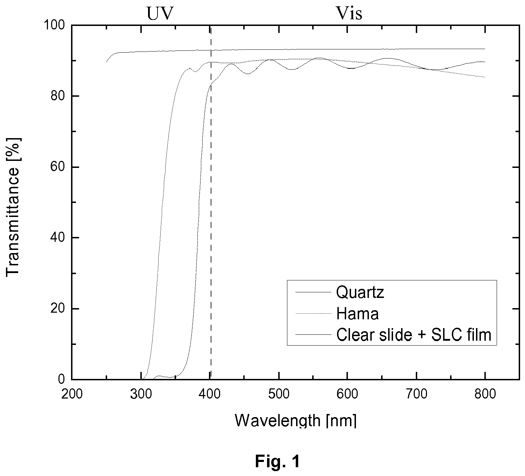

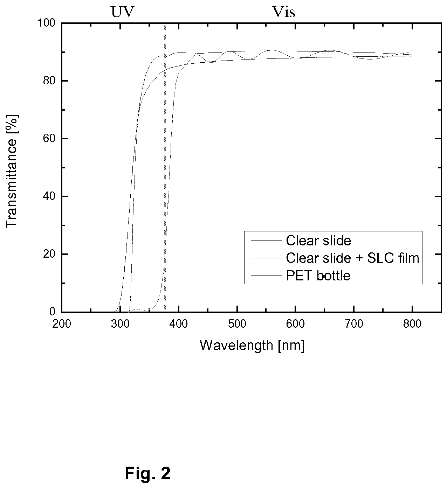

Fig. 2 shows the transmittances of the PET bottle, cutting at 325nm and therefore using only the UVA light (320nm-400nm); and the clear slide plus the UV film, cutting at 383nm.

### DETAILED DESCRIPTION OF THE INVENTION

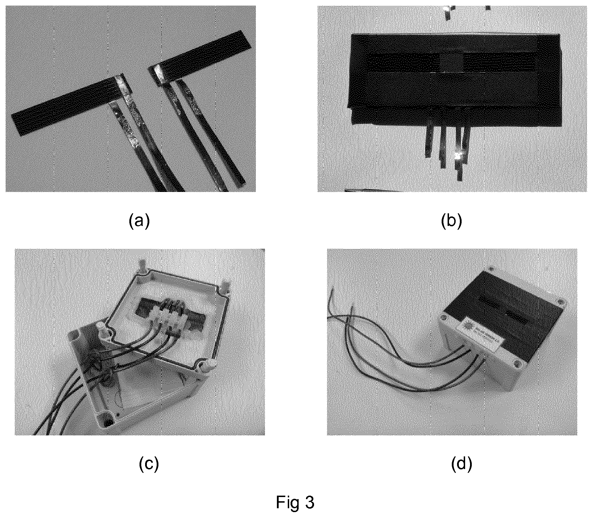

The manufacturing process started with the cut of the original solar cells of 6mm x 116mm to the required size of 6mm x 30mm. The cell was only cut in length. It was conducted at the facilities of CENTESIL (Centro de Tecnologia de Silicio Solar) in Madrid, using an automatic dicing saw. After cutting, cells were measured in an indoor solar simulator (AM1.5G) at STC at IES-UPM labs, obtaining the ISC in order to match the cells for the sensor units. Next step was to wire the cells to the connection tabs (Fig. 3a), which was done by soldering in the hot plate using solder paste (Sn-Ag). Once the cells were soldered, the Tedlar® was prepared and the cells placed on top for encapsulation. Encapsulation used a clear silicone of two components, Wacker Silgel 612, in a ratio of 1.5:1. It was mixed and then vacuumed to remove possible air bubbles and then poured into the Tedlar and cells, covering with the glass cover (Fig. 3b). Curing was at room temperature (24h at 25°C).

After the encapsulation, wires were soldered to the tabs and then connected to screw terminals, where the external wires of 0.5m each were connected (Fig. 3 c). Then the units were fixed into small boxes that protect the wiring and have sufficient room for including the electronics of the sensor in the future. Silica was added to avoid moisture. Shunt resistors of 0.1Ω-1% were connected to the cells that will be measuring ISC. Fig. 3d shows the final sensor unit. The UV filter film was not included at this point as it was required that the cells were calibrated first so they have the same reference.

Initial characterization: Initial calibration consisted of an initial exposure to sunlight to reduce initial photon degradation effects and to stabilise the cells and an outdoor calibration. It was conducted at University of Jaen (Jaen, Spain). Initial exposure consisted in exposing the solar cell for a total of 5kWh/m2 open-circuited according to the IEC 61215 'Crystalline silicon terrestrial photovoltaic (PV) modules. Design qualification and approval'.

For the outdoor calibration the specifications of the international standard 'IEC-60904-2 - Photovoltaic devices. Part 2: Requirements for reference solar cells' were followed. With the solar cells on the tracker the ISC of three of the cells was measured, as well as the VOC and temperature of the fourth cell. The global irradiance on the normal plane was measured by a pyranometer placed on the tracker. Main reference parameters of the sensor were obtained, which converted into standard testing conditions (STC), 1000W/m2 and 25°C, were:
I_(SC,Cell_1)^*=54.78mA
I_(SC,Cell_2)^*=55.22mA
I_(SC,Cell_3)^*=56.23mA
V_(OC,Cell_4)^*=594.12mV

### Testing .

After the initial calibration, the performance of the clean water sensor was tested. Four types of tests were conducted, including an initial test measuring global irradiance over the span of a day and calculating sunshine duration, tests measuring the UV irradiance with the new UV sensor, a test with tap water and preliminary experiments with polluted water. The objective of these tests was to determine if the new sensor provides useful data to help the water quality monitoring. Main parameters were analysed: global irradiance, sunshine duration, global irradiance under the bottle, UV irradiance and water temperature. In the preliminary experiment with polluted water, these parameters were compared with the reference values given in the literature for the SODIS process to determine whether the water was clean or not and with the water microbiological analysis.

### Global irradiance and sunshine duration.

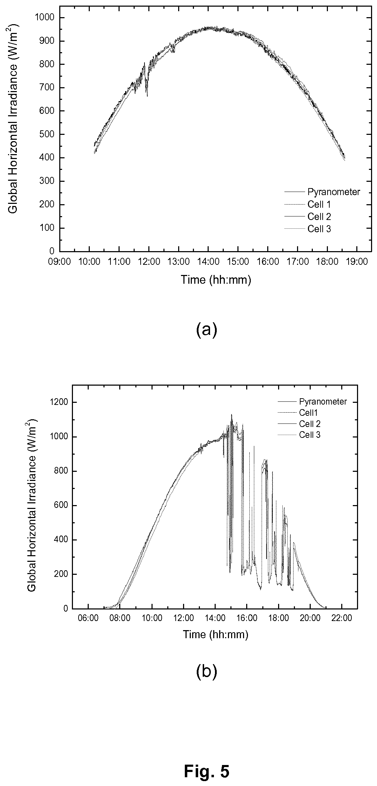

To verify the performance of the sensor as sunshine duration recorder, the sensor was subjected to different days of exposure under natural sunlight and its output compared with a reference global horizontal pyranometer. Figs. 5a and 5b show the performance of the sensor cells when used to measure global horizontal irradiance in comparison with the reference data from the pyranometer. Two different climatic conditions are represented, corresponding to sunny and cloudy weather, and good agreement is shown between the global measured by the PV cells and the reference global irradiance given by the pyranometer.

From the global horizontal irradiance measured by Cell 1, sunshine duration was calculated and the result compared with the sunshine duration calculated by the pyrheliometer and pyranometer from the weather station. For both the pyranometer and the cell, the selected method was the Olivieri.

### UV irradiance.

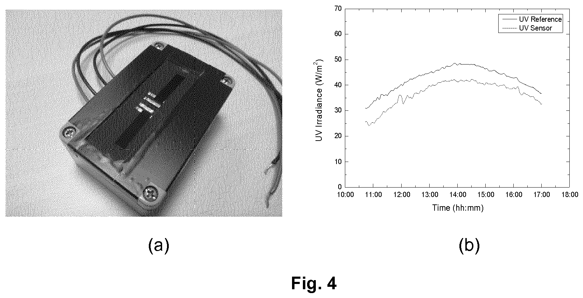

The UV irradiance is measured by the sensor using two cells, one of them with the UV film attached on the front surface (Fig. 4a). Tests consisted of measuring the UV output from the new sensor and then compared with the UV output from a reference global UV sensor (Fig. 4b). A good correlation between the two UV signals is observed, with the UV sensor measuring an approximately 87% of the total UV irradiance measured by the reference UV radiometer. This difference is explained first because the reference global UV sensor measures total UV, including UVA and UVB, and the new sensor measures only the UVA part of the UV spectrum, according to the cut-off wavelength of the filter. Another reason for differences between the sensors is the use of a clear glass in the UV reference sensor and a standard glass in the encapsulated cell of the sensor, which have different overall transmittances.

Finally, the supporting material of the UV film is PET and not glass, which is limiting the light transmittance. One could think that this is not a good solution for a low-cost UV sensor, but it is necessary to consider the system requiring the sensor, in this case SODIS bottles. They use the same material as the sensor, PET, and therefore the UV recorded by the PV sensor will be actually the same that the SODIS bottles are using. This UV value will be more useful and accurate to detect clean water. The PV sensor solution adopts the same principle as solar cells used as global irradiance sensors in power plants of the same technology, predicting more accurately the real performance of the PV plants. In summary, it is concluded that the UV measurement using this method is feasible for solar disinfection technologies.

### Global irradiance under the bottle and water temperature

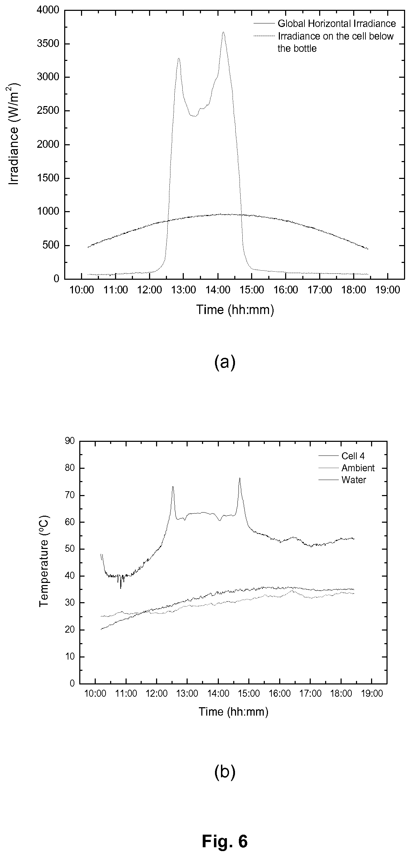

This third group of tests consisted of using a PET bottle filled with tap water and the two cells of the clean water PV sensor underneath, and then to expose the bottle to the sunlight along the day. The set-up of the experiment consisted of a bottle of 1.5L (86mm water depth) which was placed horizontally and north-south orientated, with the sensor below; and with the special bottle cap with the temperature sensor inserted and a small tap for future experiments to take samples.
Weather conditions during the experiment corresponded to a sunny day, as indicated in Fig. 6a by the global horizontal irradiance. Fig. 6a also gives the irradiance that reaches the bottom of the bottle. It can be observed that during the central hours of the day the irradiance under the bottle increases rapidly, to irradiance values up to three times the global irradiance measured by the reference. There is a concentration effect at the bottom of the bottle on the cell, due to the circular shape of the bottle and the clear water that act as a lens, concentrating the sunlight onto a smaller area, in this case measured by the cell. During the span of the day, the cumulative global irradiance is 23.2MJ/m2 and the cumulative irradiance at the bottom of the bottle is 22.9MJ/m2, practically the same due to the concentration factor. Without this concentration, the irradiance at the bottom of the bottle should have been of approximately 2.8MJ/m2 as most of the sunlight should have been absorbed in the water. This might mean that the circular shape of the bottle is actually transmitting most of the light during the concentration effect and not absorbing it, which can have two different effects in the water purification process when the water is clear in comparison with a flat bag of water of the same depth. First, we could think that this effect would accelerate the process, as it seems that we get more light to the bottom of the bottle. But this means that the sunlight is not being absorbed through the bottle, so the first layers of water might not being affected by the UV disinfection, so it might be the opposite effect, and it decreases the rate of inactivation. On the other hand, the concentration is accumulating solar irradiance in a smaller area, which will heat up faster. This heat can be transferred by conduction to the rest of the bottle and contribute to increase the water temperature, improving the water disinfection. This concentration effect is due to the low turbidity of the water and it is expected to decrease with higher turbidity values. It requires further analysis to determine if it has any significant effect in the water purification process.

Fig. 6b represents ambient temperature, water temperature and cell temperature. Water temperature measured by the low-cost sensor gets to a maximum of about 35°C and then stabilizes. During the concentration period, the cell temperature also increases, to a maximum of 75°C, following the concentration profile.

### Solar water disinfection of water with E.coli

The last test used SODIS bottles to purify water polluted with a real microorganism, E.coli bacteria, and evaluated the sensor performance by comparing the sensor information with the water microbiological analysis.

Prior to the experiment itself, a literature review on the main parameters of the solar disinfection process, including UV dose, global irradiance dose, water temperature, etc., was also conducted in order to identify the most appropriate parameter or combination of parameters to standardise the clean water detection criteria on solar water purification.

It is required to know the main criteria for clean water in solar disinfection in order to develop a suitable sensor. In general, SODIS establishes the main criteria as a combination of time and weather parameters, consisting of 6h in a sunny day or between 2-3 days if it is cloudy. But being more specific implies studying the other main parameters: UV irradiance, global irradiance and water temperature, the main scientific literature on real sunlight water disinfection (not simulated light) was reviewed in order to extract the main values of these parameters. This issue of determining the radiation required for complete inactivation of microorganisms was already reported by Bandala et al. in 2011 when developing clean water sensors for SODIS based on azo dyes.

This review was divided into three groups of pathogens that might be present in water: bacteria, viruses and protozoa.Most of the works conducted under real sun used a system to control the water temperature, and only few of them allowed the temperature to follow the natural profile under the sun, which is more realistic when calculating inactivation rates and corresponding doses. But the temperature-controlled experiments provide information about the effect of temperature and the calculation of doses of UV and global irradiance at different temperatures. Overall, there is the feeling that only one parameter is not sufficient to define a clean water criteria when using solar disinfection and UV, but a combination of parameters including time, UV dose, global irradiance, water temperature; and their distributions along the day.

In general, the works show that the synergistic effects of temperature and UV are only relevant when the water temperature is over 45h. Enteric bacteria and viruses require smaller doses of UV and global irradiance than protozoa (in these works, Cryptosporidium parvum), which are more resistant to solar disinfection. Another general observation is the no-regrowth of bacteria (E. coli) in the water treated naturally with sunlight during periods ranging from 5 days to 2 weeks after treatment. Finally, the comparison between UV doses and global irradiance between the different research works is really difficult due to the disparity of equipment used (varying in spectral ranges) and the different setups adopted in the experiments. However, it is necessary to analyse the studies and understand the main findings and the previous mentioned limitations to establish a clean water criteria for solar disinfection.

Considering the criteria given in the SODIS manual , a proposed combination of parameters measured by the clean water PV sensor to decide when the water is clean was presented. The limits were established so most of the inactivation doses for both enteric bacteria and viruses were covered. These were the proposed clean water criteria for the sensor when the water turbidity is below 30NTU:
Sunshine duration > 6h.
Cumulative global irradiation with water temperature above 30°C > 9MJ/m2.
Cumulative global irradiation with water temperature above 30°C at the bottom of the bottle > 4.5 MJ/m2.
Cumulative UV with temperature above 30°C > 375kJ/m2.

Preliminary test with SODIS bottles and E.coli, a preliminary test was conducted with a real microorganism in the water, E.coli, to test the suitability of the new sensor. The test was conducted at the facilities of IMDEA Agua (Alcala de Henares, Spain).

The E.coli used was previously isolated from a real wastewater and preserved as a suspension in 100 mL of buffered peptone water at 4°C. 1mL of the bacterial cell preparation was added to a 1,500mL SODIS PET bottle rinsed and disinfected by artificial UV irradiance during 1 hour, and then filled with filtered Milli-Q water (0.22µm). The bottle was prepared following SODIS guidelines, first filling up to 75% of capacity, then shaking for 20s, and finally filling up completely. A total of 8 bottles were prepared, 6 for the sunlight exposure (one per hour), and 2 for control (one in the lab and one outdoor in the shade).

The SODIS bottles were set up N-S oriented under natural sunlight for 6 hours along with the sensor monitoring global irradiance, UV irradiance, irradiance under the bottle and cell and water temperature in the lid, plus a small weather station measuring global horizontal irradiance, UV irradiance and ambient temperature. Data were recorded automatically at 30s-intervals. Each hour, one bottle was removed for microbiological analysis.

Microbiological analysis was conducted following the standard method for detection and enumeration of Escherichia coli and coliform bacteria in drinking water by membrane filtration technique using chromgenic coliform agar (CCA). Samples were initially filtered through a membrane filter of 0.45µm. The samples were previously diluted if necessary to obtain between 20 and 200 colonies per filter, with dilution factors up to 104 using sterilized Milli-Q water. Each sample was filtered three times and then transferred to a Petri dishes with a Chromogenic Coliforms Agar (CCA, Scharlau 1-695) prepared with the Coliform CV Selective Supplement (Scharlau). Petri dishes were incubated at 36°C ± 1 for 18-24h and after plate counts were determined, enumerating E.coli as deep blue to violet colonies (CFU/100mL).

Climatic conditions during the experiment : Overall, it was a sunny day but windy, with fast clouds passing-by and dropping the irradiance to low levels each time that a cloud crossed the sun. From the sensor, Fig.6a shows the irradiance bottle in comparison with the global irradiance. A concentration effect can be observed again on the cell, although this time it is lower (maybe due to the different orientation of the bottle, bottle cap was facing north instead of south; or the presence of bacteria in the water).

Regarding temperatures (Fig. 6b), the ambient temperature was of 20°C on average, varying due to a very windy day with cool air. The solar cell temperature was about 15°C above ambient temperature, but it does not follow the concentration profile due to the fast clouds passing by, so the thermal inertia of the cell cannot follow the rapid changes. Finally, the water temperature of the bottle with the sensor was of 24°C on average, not reaching 30°C at any moment. The observed peak is probably caused by concentration effect. During this experiment the temperature sensor inside the bottle is facing south, so it is not protected from sun exposure within the bottle, reaching at a certain moment a peak concentration that reaches almost 100°C.

With the SODIS bottles exposed to the real sun and the control samples kept in the dark, we observe how the E.coli is being inactivated, reducing the bacteria population with solar exposure. The sample corresponding to the 6th hour presents an increase in bacterial population, possibly due to different exposure conditions as it is the only bottle not directly on the ground but over the sensor, more exposed to the wind and with less reflected irradiance from the ground, leading to reduced temperature and reduced irradiance exposure. A slower inactivation would explain this different result. Other possible causes would be re-growth of bacteria but it would be unlikely due to the same climatic conditions. After 5h under natural sunlight, the reduction of E.coli in the ground bottles is of 96%. From the water microbiological analysis, the water was still 'no clean'.

From the sensor monitored data, main parameters required to decide if the water is clean or not according to the proposed criteria for clean water detection were calculated. Table below shows the obtained parameters against the proposed criteria, where none of the clean water criteria values are met. Sunshine duration achieves roughly 5h due to the fast clouds, while cumulative global irradiation is of 17.3MJ/m2, cumulative global irradiation is of 13.4MJ/m2 and cumulative UV is of 528kJ/m2, but all below 30°C water temperature. With these data, the decision would be of 'no clean water', which agrees with the microbiological data. However, it would be necessary to conduct extensive experiments to validate the proposed criteria, and it would be also interesting to establish a new set of clean water criteria using the same parameters but for the case of lower temperatures.

Table: Proposed clean water criteria based on sunshine duration, global irradiation, global irradiation through the bottle and UV irradiation; and calculated values for the conducted experiment (21^{st} May 2013), not meeting the criteria for clean water.

In summary, the low-cost sensor is capable of monitoring several parameters relevant to SODIS, including sunshine duration, global irradiation, water temperature and UV irradiation, plus an additional parameter which is the irradiance through the bottle. This set of information can be used to determine whether the water is clean or not after the solar disinfection according to a proposed criteria that has to be further analysed, improved and validated.

The sensor hereby described it requires a data monitoring system, i.e., a datalogger or processing unit is thus required. In a preferred embodiment a datalogger with high-resolution has been already developed using an Arduino based platform.

## Claims

1. Water disinfection device, comprising
• a plastic bottle aimed to contain water to be disinfected; and
• a sensor that measures a set of parameters outputting a set of measured parameters
**characterized in that** the sensor comprises:
• a first unit located over the bottle that measures, at least, global irradiance, UV irradiance and sunshine duration, said first unit comprising:
∘ two identical solar cells; and
∘ a UV-blocking filter located on top of one of said solar cells of the first unit
• a second unit located under the bottle that measures, at least, global irradiance through the bottle, said second unit comprising
∘ two identical solar cells; and
• a processing unit connected to such first and second units;
wherein the set of measured parameters are the parameters measured by the first and second units and the processing unit compares the set of measured parameters with predetermined data to decide if water is safe to drink.

2. Water disinfection device according to claim 1 wherein the plastic is transparent PET, allowing the passage of light.

3. Water disinfection device according to any one of claims 1 or 2 further comprising a temperature sensor connected to the processing unit and operative to measure water temperature.

4. Water disinfection device according to claim 3 wherein the temperature sensor is arranged in a cap of the bottle.

5. Water disinfection device according to any one of claims 1 to 4 wherein the bottle has volume comprised between 1 and 2 liters.

6. Water disinfection device according to any one of claims 1 to 5 wherein the solar cells of the second unit have a width comprised between 4mm and 6mm and a length up to 36mm.

7. Water disinfection device according to any one of claims 1 to 6 wherein the solar cells are monocrystalline silicon solar cells.

8. Water disinfection device according to claim 7 wherein the solar cells are encapsulated on a glass cover, a clear silicone and a black back cover polyvinyl fluoride film.

9. Water disinfection device according to any one of claims 1 to 8 wherein the UV-blocking filter comprises at least one UV absorber selected from the group consisting of: UV film, glass filter, UV coated glass and polymer with UV absorbers.

10. Water sensor according to any one of claims 1 to 9 wherein the solar cells further comprise a clear glass.

11. Water disinfection device according to claim 10 wherein the clear glass is placed facing down and it further comprises at least one layer of encapsulant arranged for reducing optical loses.

12. Method for solar disinfection of water comprised in a water disinfection device according to any one of claims 1 to 11, **characterized in that** the method comprises the steps of:
a) calculating the measured UV irradiation;
b) calculating the measured sunshine duration;
c) comparing the measured UV irradiation and the measured sunshine irradiation with their respective values on a set of predefined parameters;
d) decide if water is safe to drink in view of the comparison of step c).

13. Method for solar disinfection of water, according to claim 12, **characterized in that** the set of parameters further comprise water temperature and **in that** the method comprises a step e) of measuring the temperature of water and step c) further comprises comparing the measured temperature with a value of the set of parameters.

14. Method for solar disinfection of water, according to claim 12, wherein the temperature is measured by means of a solar cell.

## Patentansprüche

1. Wasserdesinfektionsgerät, das Folgendes umfasst:
• eine Kunststoffflasche zum Aufnehmen von desinfiziertem Wasser; und
• einen Sensor, der einen Satz von Parametern misst, wobei ein Satz gemessener Parametern ausgegeben wird;
**dadurch gekennzeichnet, dass** der Sensor Folgendes umfasst:
• eine erste über der Flasche angebrachte Einheit, die mindestens die gesamte Bestrahlungstärke, die UV-Bestrahlungsstärke und die Sonnenscheindauer misst, wobei die erste Einheit Folgendes umfasst:
∘ zwei identische Solarzellen; und
∘ einen auf einer der Solarzellen der ersten Einheit angebrachten UVundurchlässigen Filter
• eine erste unter der Flasche angebrachte Einheit, die mindestens die gesamte Bestrahlungstärke der Flasche misst, wobei die zweite Einheit Folgendes umfasst:
∘ zwei identische Solarzellen; und
• eine mit der ersten und zweiten Einheit verbundene Verarbeitungseinheit;
wobei der Satz gemessener Parameter die von der ersten und zweiten Einheit gemessenen Parameter sind und die Verarbeitungseinheit den Satz gemessener Parameter mit vorbestimmten Daten vergleicht, um zu entscheiden, ob Wasser trinkbar ist.

2. Wasserdesinfektionsgerät nach Anspruch 1, wobei der Kunststoff transparentes PET ist, was den Durchtritt von Licht ermöglicht.

3. Wasserdesinfektionsgerät nach einem der Ansprüche 1 oder 2, das ferner einen Temperatursensor umfasst, der mit der Verarbeitungseinheit verbunden ist und dem Messen der Wassertemperatur dient.

4. Wasserdesinfektionsgerät nach Anspruch 3, wobei der Temperatursensor in einem Deckel der Flasche angeordnet ist.

5. Wasserdesinfektionsgerät nach einem der Ansprüche 1 bis 4, wobei die Flasche ein Volumen aufweist, das zwischen 1 und 2 Liter umfasst.

6. Wasserdesinfektionsgerät nach einem der Ansprüche 1 bis 5, wobei die Solarzellen der zweiten Einheit eine Breite, die zwischen 4 mm und 6 mm umfasst, und eine Länge von bis zu 36 mm aufweisen.

7. Wasserdesinfektionsgerät nach einem der Ansprüche 1 bis 6, wobei die Solarzellen Solarzellen aus monokristallinem Silizium sind.

8. Wasserdesinfektionsgerät nach Anspruch 7, wobei die Solarzellen in einer Glasabdeckung, einem klaren Silikon und einer schwarzen Rückseitenabdeckung aus Polyvinylfluoridfilm eingekapselt sind.

9. Wasserdesinfektionsgerät nach einem der Ansprüche 1 bis 8, wobei der UV-undurchlässige Filter mindestens einen UV-Absorber umfasst, der aus der Gruppe ausgewählt ist, die aus Folgendem besteht: UV-Film, Glasfilter, UVbeschichtetes Glas und Polymer mit UV-Absorbern.

10. Wassersensoren nach einem der Ansprüche 1 bis 9, wobei die Solarzellen ferner ein klares Glas umfassen.

11. Wasserdesinfektionsgerät nach Anspruch 10, wobei das klare Glas nach unten gerichtet platziert ist und es ferner mindestens eine Schicht Einkapselungsmittel umfasst, das zum Reduzieren optischer Verluste angeordnet ist.

12. Verfahren zur solaren Desinfektion von Wasser, das in einem Wasserdesinfektionsgerät nach einem der Ansprüche 1 bis 11 inbegriffen ist, **dadurch gekennzeichnet, dass** das Verfahren die folgenden Schritte umfasst:
a) Berechnen der gemessenen UV-Bestrahlungsstärke;
b) Berechnen der gemessenen Sonnenscheindauer;
c)Vergleichen der gemessenen UV-Bestrahlungsstärke und der gemessenen Sonneneinstrahlung mit ihren jeweiligen Werten eines Satzes vordefinierter Parameter;
d) Entscheiden, ob das Wasser im Hinblick auf den Vergleich von Schritt c) trinkbar ist.

13. Verfahren zur solaren Desinfektion von Wasser nach Anspruch 12, **dadurch gekennzeichnet, dass** der Satz von Parametern ferner die Wassertemperatur umfasst und dass das Verfahren einen Schritt e) des Messens der Wassertemperatur umfasst und Schritt c) ferner das Vergleichen der gemessenen Temperatur mit einem Wert des Satzes von Parametern umfasst.

14. Verfahren zur solaren Desinfektion von Wasser nach Anspruch 12, wobei die Temperatur mittels einer Solarzelle gemessen wird.

## Revendications

1. Dispositif de désinfection de l'eau, comprenant
• une bouteille en plastique destinée à contenir l'eau à désinfecter ; et
• un capteur qui mesure un ensemble de paramètres émettant un ensemble de paramètres mesurés
**caractérisé en ce que** le capteur comprend :
• une première unité située sur la bouteille qui mesure, au moins, l'irradiation globale, l'irradiation UV et la durée d'ensoleillement, ladite première unité comprenant :
∘ deux cellules solaires identiques ; et
∘ un filtre anti-UV situé au-dessus de l'une desdites cellules solaires de la première unité
• une deuxième unité située sous la bouteille qui mesure, au moins, l'irradiation globale par la bouteille, ladite deuxième unité comprenant
∘ deux cellules solaires identiques ; et
• une unité de traitement raccordée à ces première et deuxième unités ;
dans lequel l'ensemble de paramètres mesurés sont les paramètres mesurés par les première et deuxième unités et l'unité de traitement compare l'ensemble de paramètres mesurés avec des données prédéterminées pour décider si l'eau est salubre.

2. Dispositif de désinfection de l'eau selon la revendication 1 dans lequel le plastique est le PET transparent, permettant le passage de la lumière.

3. Dispositif de désinfection de l'eau selon l'une quelconque des revendications 1 ou 2 comprenant en outre un capteur de température raccordé à l'unité de traitement et opérationnel pour mesurer la température de l'eau.

4. Dispositif de désinfection de l'eau selon la revendication 3 dans lequel le capteur de température est disposé dans une capsule de la bouteille.

5. Dispositif de désinfection de l'eau selon l'une quelconque des revendications 1 à 4 dans lequel la bouteille a un volume compris entre 1 et 2 litres.

6. Dispositif de désinfection de l'eau selon l'une quelconque des revendications 1 à 5 dans lequel les cellules solaires de la deuxième unité ont une largeur comprise entre 4 mm et 6 mm et une longueur jusqu'à 36 mm.

7. Dispositif de désinfection de l'eau selon l'une quelconque des revendications 1 à 6 dans lequel les cellules solaires sont des cellules solaires au silicium monocristallin.

8. Dispositif de désinfection de l'eau selon la revendication 7 dans lequel les cellules solaires sont encapsulées sur un couvercle en verre, un silicone transparent et un film de fluorure de polyvinyle de couvercle noir arrière.

9. Dispositif de désinfection de l'eau selon l'une quelconque des revendications 1 à 8 dans lequel le filtre anti-UV comprend au moins un absorbeur UV choisi dans le groupe consistant en : film UV, filtre en verre, verre avec revêtement UV et polymère avec absorbeurs UV.

10. Capteur d'eau selon l'une quelconque des revendications 1 à 9 dans lequel les cellules solaires comprennent en outre un verre transparent.

11. Dispositif de désinfection de l'eau selon la revendication 10 dans lequel le verre transparent est placé face vers le bas et il comprend en outre au moins une couche d'encapsulant disposée pour réduire les pertes optiques.

12. Procédé pour la désinfection solaire de l'eau compris dans un dispositif de désinfection de l'eau selon l'une quelconque des revendications 1 à 11, **caractérisé en ce qu'**il comprend en outre les étapes consistant à :
a) calculer l'irradiation UV mesurée ;
b) calculer la durée d'ensoleillement mesurée ;
c) comparer l'irradiation UV mesurée et l'irradiation solaire mesurée avec leurs valeurs respectives sur un ensemble de paramètres prédéfinis ;
d) décider si l'eau est salubre au vu de la comparaison de l'étape c).

13. Procédé pour la désinfection solaire de l'eau, selon la revendication 12, **caractérisé en ce que** l'ensemble de paramètres comprend en outre la température de l'eau et **en ce que** le procédé comprend une étape e) consistant à mesurer la température de l'eau et une étape c) comprend en outre la comparaison de la température mesurée avec une valeur de l'ensemble de paramètres.

14. Procédé pour la désinfection solaire de l'eau, selon la revendication 12, dans lequel la température est mesurée au moyen d'une cellule solaire.
